# FASCICULE DE BREVET EUROPEEN

(11) **EP 0 808 109 B1**
(45) Date de publication et mention de la délivrance du brevet: **09.09.1998**
(21) Numéro de dépôt: 96903074.1
(22) Date de dépôt: 08.02.1996
(51) Int. Cl.: A23G 3/10, A23G 7/00

(54) **MACHINE POUR LA FABRICATION AUTOMATIQUE DE BARBE A PAPA**
AUTOMATISCHE VORRICHTUNG ZUR HERSTELLUNG VON ZUCKERWATTE
AUTOMATIC CANDYFLOSS MACHINE

(30) Priorité: 10.02.1995 FR 9501741
(43) Date de publication de la demande: 26.11.1997
(73) Titulaire: Buttin, Paul, 01120 Montuel (FR); Le-Culier, Jean-Marc, 01360 Beligneux (FR)
(72) Inventeur: Buttin, Paul, 01120 Montuel (FR); Le-Culier, Jean-Marc, 01360 Beligneux (FR)
(74) Mandataire: Maureau, Philippe
(86) Numéro de dépôt international: FR9600212
(87) Numéro de publication internationale: WO9624257

(56) Documents cités:
- EP-A- 0 591 095
- FR-A- 2 173 677
- FR-A- 2 248 792
- US-A- 3 203 365
- US-A- 3 580 456
- US-A- 4 293 292

## Description

La présente invention a pour objet une machine pour la fabrication automatique de barbe à papa. La barbe à papa est une confiserie faite de filaments de sucre enroulés sur une baguette. De façon traditionnelle, la barbe à papa est réalisée avec l'intervention permanente d'un opérateur. Une machine pour la fabrication de barbe à papa comprend une tête cylindrique creuse, remplie de sucre, chauffée à environ 150°C et tournant à une vitesse élevée, de 3 à 5 000 tours par minute. La tête comportant des orifices radiaux, le sucre fondant est centrifugé sous forme de filaments. La dispersion de ces filaments est limitée vers l'extérieur par un réceptacle en forme de bassine. L'opérateur, muni d'une baguette ou d'un cône en carton, recueille les filaments de sucre centrifugé et les organise en forme de boule d'un diamètre de 30 cm environ. Le mouvement manuel est double, il exécute une rotation de la baguette sur elle-même, et une rotation de la baguette le long de la paroi de la bassine.

Il a déjà été tenté de réaliser des machines automatiques pour la réalisation de barbe à papa. Une telle machine est décrite dans le document FR 2 248 792.

Toutefois, une telle machine n'a jamais pu être exploitée de façon satisfaisante, et de façon autonome, dans la mesure où la réserve de baguettes ne permet le stockage que d'un nombre limité de celles-ci, que le mode de prise des baguettes ne donne pas satisfaction, dans la mesure où ces dernières devraient être parfaitement calibrées, ce qui n'est pas le cas en pratique, ce qui conduit à la casse de certaines baguettes qui sont décentrées par rapport au mors de tenue des baguettes, et enfin que le dispositif d'évacuation des barbes à papa formées ne peut en aucun cas être mis en oeuvre tant pour des raisons techniques que pour des raisons d'hygiène.

Le but de l'invention est de fournir une machine pour la fabrication automatique de barbe à papa, qui puisse fonctionner de façon autonome à partir d'un monnayeur à pièces, d'un dispositif à cartes, d'un simple bouton ou de tout autre mécanisme qui déclenche le processus de fabrication, sans nécessiter la présence permanente ou périodique d'un opérateur, sa structure tenant compte de l'irrégularité de forme des baguettes, et ne nécessitant qu'un chargement périodique et avec une périodicité très grande, des baguettes, d'une part, et du sucre en poudre, d'autre part.

A cet effet, la machine qu'elle concerne, du type comprenant une réserve de baguettes assurant la distribution des baguettes une à une, un dispositif de transfert de chaque baguette vers un toc entre les mâchoires duquel la baguette est bloquée tout en faisant salle à l'intérieur d'une bassine contenant la tête de projection du sucre, le toc étant entraîné en rotation ainsi que la tête de projection au cours de l'opération de formation de la barbe à papa, est caractérisée en ce que la réserve de baguettes est constituée par un cylindre d'axe horizontal ou sensiblement horizontal, monté pivotant autour de son axe et associé à des moyens d'entraînement en rotation, ce cylindre étant équipé, sur sa face interne, d'au moins une barrette longitudinale délimitant une cavité calibrée à la forme des baguettes débouchant dans la face de la barrette tournée vers l'avant dans le sens de rotation du cylindre, celui-ci contenant, en-dessous de sa génératrice la plus haute, un dispositif de récupération et de transfert de chaque baguette prélevée par la barrette dans la réserve et échappant à celle-ci sous l'effet de la gravité.

Les baguettes destinées à la formation de barbe à papa étant le plus souvent en bois, de section carrée de 4 mm de côté, possèdent une section qui n'est pas parfaitement constante, et ne sont pas toutes rectilignes, avec des extrémités parfois ébréchées. De plus, ces caractéristiques sont susceptibles de varier en fonction des conditions d'hygrométrie et de stockage. Le dispositif selon l'invention permet le chargement d'un nombre important de baguettes à l'intérieur du cylindre. La préhension des baguettes étant réalisée individuellement à l'aide d'une barrette délimitant une cavité calibrée, les baguettes non suffisamment calibrées, par exemple une baguette non rectiligne, ne seront pas prises par la barrette et pas transférées vers le poste suivant de formation de barbe à papa. Outre le fait que ce dispositif permet de réaliser de façon simple, et en contrôlant leur forme, les baguettes, il assure le stockage d'un nombre important de baguettes, sans nécessiter pour l'opérateur un positionnement précis de celles-ci, puisqu'il suffit de déposer les baguettes en vrac, orientées sensiblement longitudinalement dans le cylindre, le positionnement et la préhension des baguettes se faisant ensuite automatiquement par l'intermédiaire d'une barrette. Il est avantageux de prévoir, sur la face interne du cylindre, deux barrettes de préhension décalées de 180° l'une par rapport à l'autre.

Suivant une possibilité, le cylindre est supporté par des galets permettant son entraînement en rotation par l'intermédiaire d'une courroie crantée entraînée par un moteur et prenant appui sur la périphérie du cylindre.

Suivant une autre caractéristique de l'invention, le dispositif de récupération et de transfert de chaque baguette prélevée dans la réserve comprend une goulotte sensiblement horizontale disposée dans le cylindre et dont une extrémité dépasse de celui-ci, cette goulotte contenant un tapis sans fin, motorisé, dont l'extrémité située à l'extérieur du cylindre débouche dans un dispositif permettant de faire passer chaque baguette d'une orientation horizontale à une orientation verticale.

A l'extrémité aval du tapis sans fin, la machine comporte un dispositif permettant de faire passer chaque baguette d'une orientation horizontale à une orientation verticale, constitué par une trémie délimitée par deux parois sensiblement verticales orientées suivant la direction d'amenée des baguettes, une paroi opposée à la zone d'amenée des baguettes, faiblement inclinée par rapport à la verticale, et une paroi, située du côté d'amenée des baguettes comportant successivement de haut en bas un plan sensiblement horizontal, un plan incliné à environ 45° et un plan peu incliné par rapport à la verticale.

A la sortie de la trémie, la baguette se trouve en position verticale. A ce niveau, la machine comprend des moyens de centrage de chaque baguette en position verticale constitués par au moins un entonnoir et des moyens d'introduction de chaque baguette dans un toc, constitués par deux galets d'axes parallèles dont au moins un comporte une gorge et dont au moins un est motorisé.

Suivant une autre caractéristique de l'invention, le toc comprend une poule montée pivotante sur un support fixe, et entraînée en rotation par sa périphérie, cette poulie étant équipée, du côté opposé au support, de deux ergots, orientés parallèlement à son axe, chaque ergot étant engagé dans un évidement que comporte une mâchoire constitutive du toc, les deux mâchoires délimitant une ouverture centrale pour la retenue d'une baguette, et étant maintenues en pression l'une contre l'autre par au moins un élément élastique, tel qu'un joint torique, le ceinturant.

Il doit être noté que les deux mâchoires du toc sont montées de façon flottante, de telle sorte que l'ouverture centrale qu'elles délimitent vient s'aligner avec la baguette telle qu'elle est positionnée par les deux galets d'entraînement disposés juste au-dessus du toc. Les deux mâchoires étant maintenues en pression l'une contre l'autre, l'introduction d'une baguette entre celles-ci va s'effectuer en force par écartement des deux mâchoires, sous l'effet du déplacement de cette baguette par rotation des deux galets.

Une baguette se trouve positionnée axialement pour la formation de barbe à papa dès qu'elle a échappé aux deux galets d'entraînement.

L'évacuation d'une baguette sur laquelle de la barbe à papa a été formée est réalisée par déplacement axial de la baguette suivante qui est entraînée par les deux galets de déplacement.

Lorsque la baguette sur laquelle la barbe à papa a été formée échappe au toc, elle tombe par gravité vers une zone de réception.

Suivant une autre caractéristique de l'invention, la bassine contenant la tête de projection du sucre, et à l'intérieur de laquelle est assurée la formation d'une barbe à papa sur une baguette, est constituée par une couronne entraînée en rotation sur laquelle est fixée, de façon amovible, une paroi latérale, et est délimitée par un plateau supérieur traversé par le toc assurant le maintien d'une baguette lors de la formation d'une barbe à papa.

Il est intéressant de noter que la paroi latérale de la bassine qui est fixée sur la couronne, par exemple par un adhésif double face ou par des boutons pression, et qui est par exemple réalisée en un matériau jetable, tel qu'en carton, peut être changé périodiquement, ce qui constitue un avantage d'un point de venue hygiénique, compte tenu du fait que du sucre est projeté sur cette surface au cours de la formation de chaque barbe à papa.

Afin de favoriser les conditions d'hygiène et de permettre au consommateur de récupérer la barbe à papa qui vient d'être formée sur une surface toujours propre, cette machine comporte, en-dessous du plateau inférieur de la bassine, une zone de réception de la barbe à papa, accessible par une porte ou similaire, et comportant deux rouleaux d'axes horizontaux et parallèles, dont l'un est muni d'une bobine de film de matière synthétique de qualité alimentaire, qui est enroulé sur l'autre rouleau, qui est le rouleau récepteur entraîné de façon séquentielle, la zone comprise entre les rouleaux formant la zone de réception de la barbe à papa, avant son évacuation.

Au début ou à la fin de chaque cycle de formation d'une barbe à papa, les deux rouleaux de film de matière synthétique sont dévidés de façon à renouveler le film dans la zone de réception d'une barbe à papa.

En outre, cette machine comprend un réservoir de stockage du sucre, dont l'extrémité inférieure comporte une ouverture de mise en communication à travers une vanne avec un tube oblique communiquant lui-même avec un tube vertical qui, débouchant au-dessus de la tête de projection du sucre pour alimenter cette dernière en sucre, est équipé à son extrémité inférieure d'un obturateur en forme de soupape, solidaire d'une tige traversant axialement le tube et dont l'autre extrémité est soumise à l'action d'un ressort agissant dans le sens de la fermeture de la soupape, un électroaimant étant prévu qui, lorsqu'il est alimenté, entraîne un poussoir qui comprime le ressort et libère la tige et l'obturateur.

En outre, cette machine comporte, dans sa face avant, une ouverture d'accès à la zone de réception de la barbe à papa, obturable par une porte constituée par un troncon de surface cylindrique d'axe horizontal, dont les deux extrémités sont solidaires de deux flasques en forme de disques circulaires, de même axe que le troncon de surface, et articulés sur les deux parois latérales de la machine autour de cet axe, de telle sorte que, dans une première position, le troncon de surface cylindrique situé à l'extérieur de la machine, obture l'ouverture et que, dans une seconde position, le troncon de surface cylindrique est basculé à l'intérieur de la machine, découvre l'ouverture et laisse l'accès à la zone de réception de la barbe à papa.

Cette machine comprend également un automate ou une carte électronique qui va, à partir du monnayeur ou autre dispositif de commande, provoquer la succession des différentes séquences permettant la réalisation automatique d'une barbe à papa.

De toute façon, l'invention sera bien comprise à l'aide de la description qui suit, en référence au dessin schématique annexé représentant, à titre d'exemple non limitatif, une forme d'exécution de cette machine :
Figure 1 est une vue en perspective de la machine dont la face avant est partiellement arrachée ;
Figure 2 en est une vue en coupe longitudinale ;
Figure 3 est une vue de détail du dispositif de stockage et de distribution des baguettes ;
Figure 4 est une vue partielle de détail du dispositif de positionnement et du dispositif de tenue d'une baguette lors de la formation de la barbe à papa ;
Figure 5 est une vue en coupe du toc de tenue d'une baguette, selon la ligne V-V de figure 4 ;
Figures 6 et 7 sont deux vues de détail à échelle agrandie du dispositif d'alimentation en sucre.

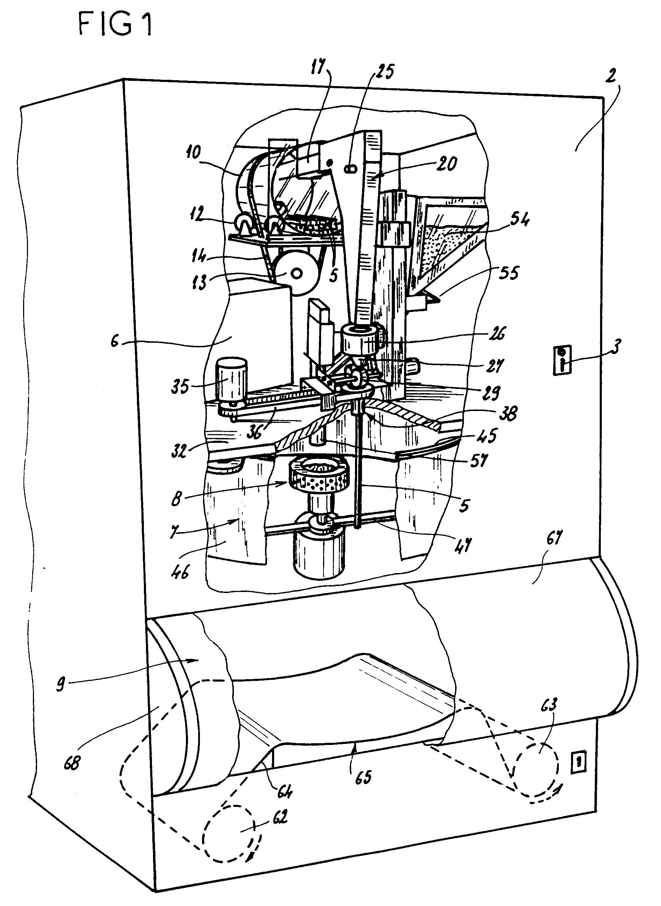

La machine représentée à la figure 1 comprend une caisse 2 dans la face avant de laquelle sont ménagées une fente 3 d'un monnayeur, ainsi qu'une ouverture 4 permettant d'accéder à la zone de réception de la barbe à papa finie, obturée par un volet non représenté au dessin.

A l'intérieur de la caisse 2, cette machine peut être considérée comme subdivisée en trois compartiments superposés, dont celui supérieur contient les baguettes 5 et le sucre destiné à la formation de la barbe à papa, les éléments pour le transfert de ces baguettes et du sucre, et un automate 6 de commande, le compartiment intermédiaire comprend les éléments de formation de la barbe à papa, notamment une bassine 7, et une tête 8 de projection de sucre, et le compartiment inférieur comprend une zone 9 de réception d'une barbe à papa formée.

Le compartiment supérieur contient tout d'abord un cylindre 10 d'axe horizontal monté pivotant autour de son axe sur des galets supports 12. Le cylindre 10 est entraîné en rotation par un moteur 13 sur l'arbre de sortie duquel est calée une poulie entraînant une courroie 14 passant sur une partie de la périphérie du cylindre 10. Ce cylindre 10, de longueur supérieure à celle des baguettes 5, est destiné à contenir ces baguettes disposées longitudinalement à l'intérieur, sur une hauteur pouvant être sensiblement égale au rayon du cylindre. Sur la paroi intérieure du cylindre 10 sont fixées deux barrettes longitudinales 15, décalées de 180° l'une par rapport à l'autre et délimitant chacune une cavité 16 calibrée à la forme des baguettes 5, cette cavité débouchant dans la face de la barrette tournée vers l'avant dans le sens de rotation du cylindre. Le cylindre contient, en-dessous de sa génératrice la plus haute, une goulotte 17 ouverte vers le haut, et dépassant de l'une des extrémités du cylindre. Cette goulotte contient un tapis sans fin 18, dont la tension est donnée par un écrou 19. L'extrémité aval du tapis sans fin débouche dans une trémie 20. La trémie 20 est délimitée par deux parois verticales 22 parallèles, orientées suivant la direction d'amenée des baguettes, ainsi que par deux parois 23 et 24 disposées à l'opposé de l'amenée des baguettes et du côté de l'amenée des baguettes. La paroi 23, opposée à l'amenée des baguettes, est faiblement inclinée par rapport à la verticale, tandis que la paroi 24 comporte successivement et de haut en bas un plan sensiblement horizontal, un plan incliné à environ 45° et un plan peu incliné par rapport à la verticale. La longueur de chacun de ces plans est inférieure à la longueur d'une baguette. En pratique, une baguette amenée par le tapis sans fin 18 bascule peu avant d'arriver au contact de la paroi 23, en coupant à ce moment le faisceau d'une cellule photo-électrique 25 ou en actionnant un dispositif de détection, tel qu'un micro-contact, puis prend appui contre le plan incliné de la paroi 24, avant de prendre une position verticale en sortie de la trémie. Juste en-dessous de la trémie sont disposés deux entonnoirs 26 et 27, alignés verticalement, présentant chacun une ouverture de diamètre peu supérieur à la plus grande dimension transversale des baguettes. Sous ces entonnoirs sont disposés deux galets d'axes horizontaux, réalisés en polyuréthanne, ou gainés de polyuréthanne ou d'un matériau similaire, un galet lisse 28 entraîné en rotation, et un galet 29 à gorge monté fou sur son axe. Il est à noter que le galet 28 est lié cinématiquement par une courroie 30 au tapis sans fin 18, le même moteur étant utilisé pour entraîner le galet 28 et le tapis 18.

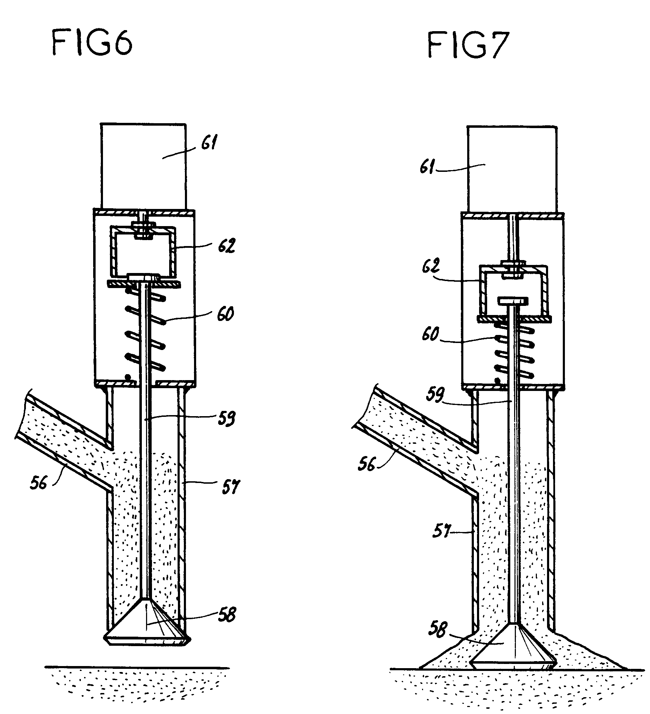

Le compartiment supérieur est séparé du compartiment intermédiaire par un plateau 32. Sur ce plateau est montée, avec interposition d'un roulement 33, une poule 34 pouvant être entraînée en rotation à partir d'un moteur 35 par une courroie 36. Sur la face supérieure de cette poule sont disposés deux ergots 37 tournés vers le haut. L'intérieur de la poule sert au montage d'un toc 38 présentant un retour annulaire supérieur permettant son appui sur la face supérieure de la poule. Le toc 38 est réalisé à partir de deux mâchoires 39 présentant, dans leurs parties supérieures en appui contre la poulie, deux évidements allongés 40 permettant l'engagement des deux ergots 37. Il est visible sur la figure 5 que les ergots 37 permettent l'entraînement en rotation du toc constitué par les deux mâchoires 39, tout en permettant un écartement des deux mâchoires pour permettre l'introduction d'une baguette 5. Les deux mâchoires délimitent en effet une ouverture centrale 42 pour l'engagement d'une baguette 5, cette ouverture présentant, à sa partie supérieure, une entrée conique 43. Les deux mâchoires dont le contour est circulaire sont maintenues en pression l'une contre l'autre par deux éléments élastiques constitués par des joints toriques 44.

Dans le compartiment intermédiaire se trouve une couronne 45 susceptible d'être entraînée en rotation à partir du moteur 35. Sur cette couronne peut être fixée, par exemple par un adhésif double face, une paroi déformable 46, par exemple en carton, destinée à former la paroi latérale de la bassine.

Au centre de la bassine est fixée par des bras 47 une tête 8 de projection du sucre, qui est entraînée en rotation par un moteur 49. La tête 8 forme un réservoir circulaire ouvert vers le haut, qui débouche latéralement par un certain nombre de perçages radiaux 49. Cette tête contient une résistance 50 assurant le maintien à une température de 35°C à 45°C environ, lorsque la machine n'est pas utilisée.

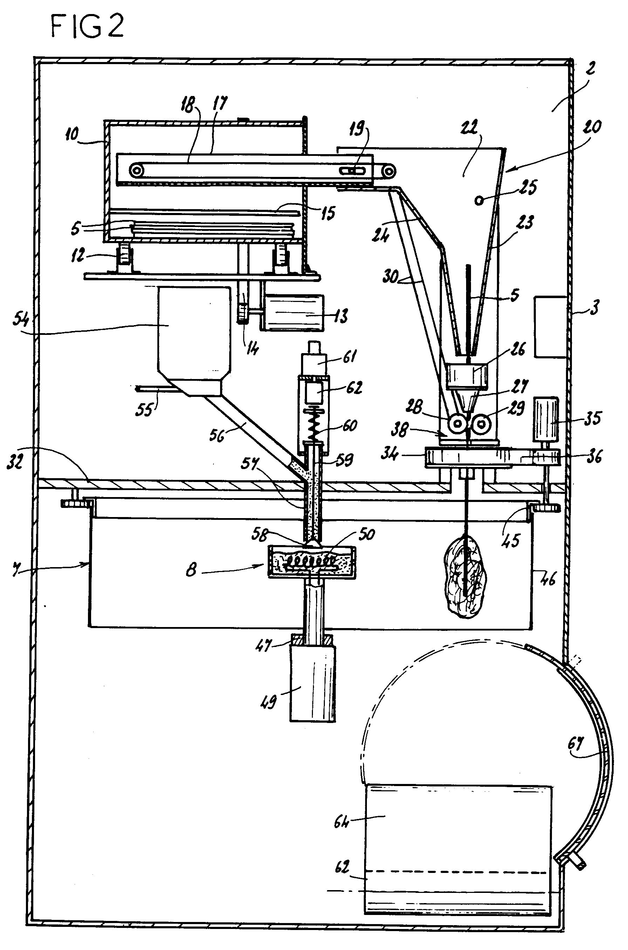

Comme montré notamment à la figure 2, le compartiment supérieur contient également un réservoir 54 de stockage du sucre. L'extrémité inférieure de ce réservoir comporte une ouverture de mise en communication à travers une vanne à guillotine 55 avec un tube oblique 56. L'extrémité inférieure de ce tube oblique 56 communique avec un tube vertical 57 débouchant au-dessus de la tête 8 de projection du sucre pour alimenter cette dernière en sucre. L'extrémité inférieure du tube vertical 57 est équipée d'un obturateur 58 en forme de soupape, solidaire d'une tige 59 traversant axialement le tube 57 et dont l'autre extrémité est soumise à l'action d'un ressort 60 agissant dans le sens de la fermeture de la soupape. Au-dessus du tube 57 est disposé un électroaimant 61, dont le noyau est solidaire d'un poussoir 62 en forme de douille susceptible d'agir sur le ressort dans un sens de compression de celui-ci, sans agir sur la tige 59.

Comme montré plus spécialement aux figures 6 et 7, lorsque l'électroaimant n'est pas actionné, le ressort 60 agit sur la tige 59 en déplacant celle-ci vers le haut et en maintenant l'obturateur soupape 58 appliqué contre le bord inférieur du tube 57 qui est ainsi fermé. Le ressort 60 assure également le déplacement de la pièce 62 formant poussoir vers le haut. A un instant du cycle de fabrication d'une barbe à papa, l'électroaimant est alimenté, repousse le noyau et la pièce 62 qui lui est associée, comme montré à la figure 7, exerçant une action de compression du ressort 60, et libérant la tige 59 qui tombe par gravité, ainsi que la soupape 58 jusqu'à ce que celle-ci prenne appui sur la surface du sucre. Du sucre peut alors s'écouler jusqu'à obturation de l'espace entre le bord inférieur du tube et la face supérieure du sucre, comme montré à la figure 7. Lorsque l'alimentation en courant de l'électroaimant cesse, l'ensemble repasse dans la position de figure 6 sous l'action de détente du ressort 60. On obtient ainsi une alimentation de la tête 8 en fonction du niveau de sucre dans cette dernière.

En-dessous de la bassine 7 est disposée une zone de réception de la barbe à papa accessible par une porte, comportant deux rouleaux 62, 63 d'axes horizontaux et parallèles. Le rouleau 62 porte une bobine de film de matière synthétique de qualité alimentaire, qui vient s'enrouler sur le rouleau 63, qui est le rouleau récepteur, entraîné de façon séquentielle, la zone 65 comprise entre les rouleaux 62 et 63 formant la zone de réception de la barbe à papa avant son évacuation.

Comme montré notamment aux figures 1 et 2, la machine comporte, dans sa face avant, une ouverture 9 d'accès à la zone de réception de la barbe à papa, obturable par une porte constituée par un troncon de surface cylindrique 67 d'axe horizontal, dont les deux extrémités sont solidaires de deux flasques 68 en forme de disques circulaires de même axe que le troncon de surface cylindrique 67. Les deux flasques sont articulés sur les deux parois latérales de la machine autour de leur axe. Dans une première position, représentée en trait plein à la figure 2, le troncon de surface cylindrique 67, situé à l'extérieur de la machine, obture l'ouverture 9. Dans une seconde position, représentée en traits mixtes à la figure 2, le troncon de surface cylindrique est basculé à l'intérieur de la machine après rotation autour de son axe, et découvre l'ouverture 9 en laissant l'accès à la zone de réception de la barbe à papa, tout en empêchant l'accès aux autres organes situés à l'intérieur de la machine.

Un des modes de fonctionnement de cette machine est le suivant.

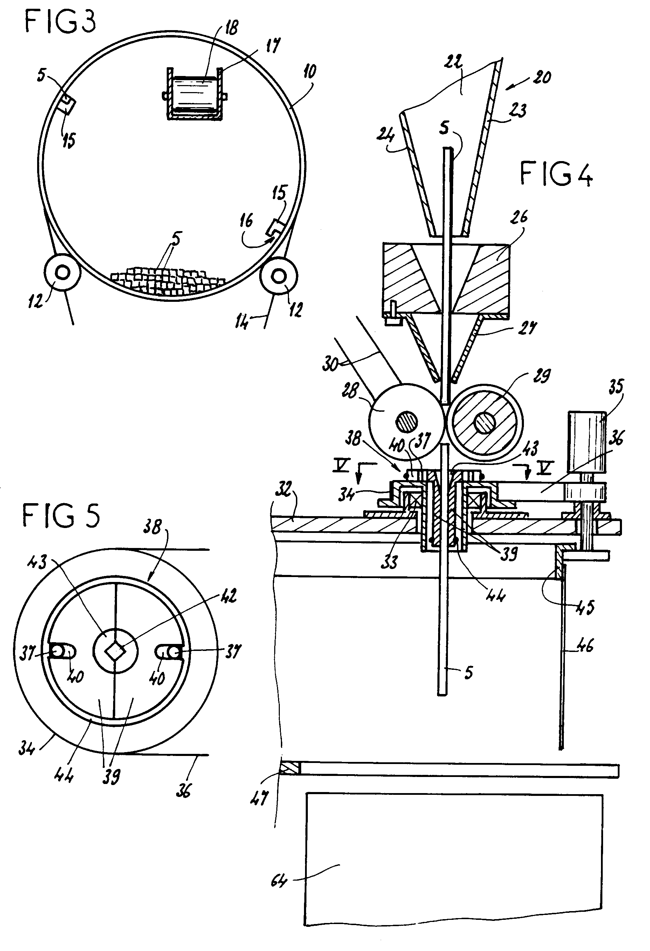

Une baguette 5 se trouve immobilisée dans le toc 38, dans la position représentée à la figure 4, une seconde baguette étant disposée immédiatement au-dessus, en appui contre les galets 28 et 29. Lorsque le cycle est déclenché par introduction d'une pièce dans le monnayeur, la tête de projection 8 du sucre est amenée à la température de projection de celui-ci, la tête est mise en rotation de même que la bassine 7 et que le toc 38. Des filaments de sucre sont projetés par la tête, et ces filaments viennent entourer la baguette 5. En fin de formation de la barbe à papa, les mouvements de rotation de la tête, de la bassine et du toc sont stoppés et l'automate commande la mise en rotation du galet 28, la mise en mouvement du tapis 18 et l'alimentation de l'électroaimant 61. La baguette située au-dessus des galets 28 et 29 est alors entraînée par ceux-ci, et vient prendre appui contre l'extrémité supérieure de la baguette 5 autour de laquelle vient d'être formée la barbe à papa, expulsant cette baguette 5 hors du toc 38, et prenant sa place à l'intérieur du toc. La baguette 5 comportant la barbe à papa est évacuée vers le réceptacle 65, sur le film 64.

En même temps que le galet 28 est entraîné en rotation, le tapis 18 est entraîné en mouvement, de même que le cylindre 10 est entraîné en rotation. Au cours de ce mouvement, une baguette est prélevée dans le cylindre 10, amenée sur le tapis 18 et évacuée vers la trémie. Lorsque la cellule 25 détecte le passage d'une baguette, elle commande, par l'intermédiaire de l'automate, l'arrêt du moteur d'entraînement du cylindre 10 ainsi que l'arrêt du moteur d'entraînement du galet 28 et du tapis 18. La baguette qui a été prélevée dans le cylindre 10 se trouve donc orientée verticalement grâce aux entonnoirs 26 et 27, et en position d'attente contre les galets 28, 29.

Le cycle de fonctionnement comporte également une phase d'entraînement en rotation du rouleau 67 pour renouveler les tronçons de films 64 après la chute de chaque barbe à papa.

Enfin, le cycle comporte la libération d'un verrou de fermeture de la porte 67, 68, permettant ainsi l'ouverture de celle-ci de la façon indiquée précédemment.

Comme il ressort de ce qui précède, l'invention apporte une grande amélioration à la technique existante en fournissant une machine pour la fabrication automatique de barbe à papa qui peut, compte tenu de sa fiabilité et de l'importance des réserves de baguettes et de sucre, fonctionner de façon tout à fait autonome. La fiabilité résulte notamment du mode de prélèvement des baguettes, puisque seules des baguettes parfaitement calibrées sont utilisées pour la formation de barbe à papa, ainsi que par l'autocentrage du toc par rapport au cône de centrage, ce qui évite les risques de casse des baguettes lors du passage de la trémie à l'intérieur du toc.

Comme il va de soi, l'invention ne se limite pas à la seule forme d'exécution de cette machine, décrite ci-dessus à titre d'exemple, elle en embrasse au contraire toutes les variantes. C'est ainsi, notamment, que le guidage et l'entraînement en rotation du cylindre 10 pourraient être différents, que les baguettes pourraient être transférées à partir du cylindre directement par gravité dans la trémie sans utiliser un tapis, ou que le guidage vertical des baguettes pourrait être réalisé par un cône ou par d'autres éléments.

## Revendications

1. Machine pour la fabrication automatique de barbe à papa, du type comprenant une réserve de baguettes assurant la distribution des baguettes une à une, un dispositif de transfert de chaque baguette vers un toc entre les mâchoires duquel la baguette est bloquée tout en faisant saillie à l'intérieur d'une bassine contenant la tête de projection du sucre, le toc étant entraîné en rotation ainsi que la tête de projection au cours de l'opération de formation de la barbe à papa, caractérisée en ce que la réserve de baguettes (5) est constituée par un cylindre (10) d'axe horizontal ou sensiblement horizontal, monté pivotant autour de son axe et associé à des moyens (13) d'entraînement en rotation, ce cylindre étant équipé, sur sa face interne, d'au moins une barrette longitudinale (15) délimitant une cavité (16) calibrée à la forme des baguettes débouchant dans la face de la barrette tournée vers l'avant dans le sens de rotation du cylindre, celui-ci contenant en-dessous de sa génératrice la plus haute un dispositif (17, 18) de récupération et de transfert de chaque baguette (5) prélevée par la barrette (15) dans la réserve et échappant à celle-ci sous l'effet de la gravité.

2. Machine selon la revendication 1, caractérisée en ce que le cylindre (10) est supporté par des galets (12) permettant son entraînement en rotation par l'intermédiaire d'une courroie crantée (14) entraînée par un moteur (13) et prenant appui sur la périphérie du cylindre (10).

3. Machine selon l'une quelconque des revendications 1 et 2, caractérisée en ce que le dispositif de récupération et de transfert de chaque baguette (5) prélevée dans la réserve comprend une goulotte (17) sensiblement horizontale disposée dans le cylindre et dont une extrémité dépasse de celui-ci, cette goulotte (17) contenant un tapis sans fin (18), motorisé, dont l'extrémité située à l'extérieur du cylindre débouche dans un dispositif permettant de faire passer chaque baguette d'une orientation horizontale à une orientation verticale.

4. Machine selon l'une quelconque des revendications 1 à 3, caractérisée en ce qu'elle comporte un dispositif permettant de faire passer chaque baguette (5) d'une orientation horizontale à une orientation verticale, constitué par une trémie (20) délimitée par deux parois sensiblement verticales (22) orientées suivant la direction d'amenée des baguettes, une paroi (23) opposée à la zone d'amenée des baguettes, faiblement inclinée par rapport à la verticale, et une paroi (24), située du côté d'amenée des baguettes comportant successivement de haut en bas un plan sensiblement horizontal, un plan incliné à environ 45° et un plan peu incliné par rapport à la verticale.

5. Machine selon l'une quelconque des revendications 1 à 4, caractérisée en ce qu'elle comprend des moyens de centrage de chaque baguette en position verticale constitués par au moins un entonnoir (24, 27) et des moyens d'introduction de chaque baguette dans un toc, constitués par deux galets (28, 29) d'axes parallèles dont au moins un comporte une gorge et au moins un est motorisé.

6. Machine selon la revendication 5, caractérisée en ce que le toc (38) comprend une poule (34) montée pivotante sur un support fixe (32), et entraînée en rotation par sa périphérie, cette poulie étant équipée du côté opposé au support, de deux ergots (37), orientés parallèlement à son axe, chaque ergot étant engagé dans un évidement (40) que comporte une mâchoire (39) constitutive du toc, les deux mâchoires délimitant une ouverture centrale (42) pour la retenue d'une baguette, et étant maintenues en pression l'une contre l'autre par au moins un élément élastique, tel qu'un joint torique (44), le ceinturant.

7. Machine selon l'une quelconque des revendications 1 à 6, caractérisée en ce que la bassine (7) contenant la tête (8) de projection du sucre, et à l'intérieur de laquelle est assurée la formation d'une barbe à papa sur une baguette (5), est constituée par une couronne (45) entraînée en rotation sur laquelle est fixée, de façon amovible, une paroi latérale (46), et est délimitée par un plateau supérieur (32) traversé par le toc (38) assurant le maintien d'une baguette (5) lors de la formation d'une barbe à papa.

8. Machine selon la revendication 7, caractérisée en ce qu'elle comporte, en-dessous de la bassine, une zone de réception de la barbe à papa, accessible par une porte ou similaire, et comportant deux rouleaux (62, 63) d'axes horizontaux et parallèles, dont celui (62) est muni d'une bobine de film (64) de matière synthétique de qualité alimentaire, qui est enroulé sur le rouleau (63), qui est le rouleau récepteur entraîné de façon séquentielle, la zone (65) comprise entre les rouleaux (62, 63) formant la zone de réception de la barbe à papa, avant son évacuation.

9. Machine selon l'une quelconque des revendications 1 à 8, caractérisée en ce qu'elle comprend un réservoir (54) de stockage du sucre, dont l'extrémité inférieure comporte une ouverture de mise en communication à travers une vanne (55) avec un tube oblique (56) communiquant lui-même avec un tube vertical (57) qui, débouchant au-dessus de la tête (8) de projection du sucre pour alimenter cette dernière en sucre, est équipé à son extrémité inférieure d'un obturateur (58) en forme de soupape, solidaire d'une tige (59) traversant axialement le tube (57) et dont l'autre extrémité est soumise à l'action d'un ressort (60) agissant dans le sens de la fermeture de la soupape, un électroaimant (61) étant prévu qui, lorsqu'il est alimenté, entraîne un poussoir (62) qui comprime le ressort (60) et libère la tige (59) et l'obturateur (58).

10. Machine selon l'une quelconque des revendications 1 à 9, caractérisé en ce qu'elle comporte, dans sa face avant, une ouverture (9) d'accès à la zone de réception de la barbe à papa, obturable par une porte constituée par un troncon de surface cylindrique (67) d'axe horizontal, dont les deux extrémités sont solidaires de deux flasques (68) en forme de disques circulaires, de même axe que le troncon de surface (67), et articulés sur les deux parois latérales de la machine autour de cet axe, de telle sorte que, dans une première position, le troncon de surface cylindrique (67) situé à l'extérieur de la machine, obture l'ouverture (9) et que, dans une seconde position, le troncon de surface cylindrique est basculé à l'intérieur de la machine, découvre l'ouverture (9) et laisse l'accès à la zone de réception de la barbe à papa.

## Claims

1. Machine for the automatic manufacture of candyfloss, of the type comprising a stick reservoir ensuring the distribution of sticks one by one, a device for transferring each stick to a dog, between the jaws of which the stick is locked while projecting inside a bowl containing the head for spraying sugar, the dog being driven in rotation as well as the spray head during the operation of forming the candyfloss, characterized in that the stick reservoir (5) consists of a cylinder (10) with a horizontal or substantially horizontal axis, mounted so as to pivot about its axis and associated with means (13) for driving it in rotation, this cylinder being equipped, on its inner face, with at least one small longitudinal bar (15) delimiting a cavity (16) matching the shape of the sticks emerging in the face of the small bar turned frontwards in the direction of rotation of the cylinder, this containing below its highest generator a device (17,18) for collecting and transferring each stick (5) lifted by the small bar (15) from the store and escaping from this under the effect of gravity.

2. Machine according to claim 1, characterized in that the cylinder (10) is supported by rollers (12) enabling it to be driven in rotation by means of a cogged belt (14) driven by a motor (13) and bearing on the periphery of the cylinder (10).

3. Machine according to either of claim 1 or 2, characterized in that the device for retrieving each stick (5) taken from the reservoir comprises a substantially horizontal conduit (17) disposed in the cylinder and of which one end projects beyond this, this conduit (17) containing a motorized endless belt (18) of which the end situated outside the cylinder emerges into a device enabling each stick to be passed from a horizontal direction to a vertical direction.

4. Machine according to any of claims 1 to 3, characterized in that it includes a device enabling each stick (5) to be passed from a horizontal direction to a vertical direction, consisting of a hopper (20) delimited by two substantially vertical walls (22) positioned along the direction in which the sticks are led, one wall (23) opposite the zone in which the sticks are led, slightly inclined to the vertical, and one wall (24), situated beside the stick feed having successively, from top to bottom, a substantially horizontal plane, a plane inclined at approximately 45° and a plane which is slightly inclined to the vertical.

5. Machine according to any of claims 1 to 4, characterized in that it includes means for centring each stick in the vertical position consisting of at least one funnel (24,27) and means for introducing each stick into a dog, consisting of two rollers (28,29) with parallel axes of which at least one has a throat and at least one is motorized.

6. Machine according to claim 5, characterized in that the dog (38) has a pulley (34) mounted so as to pivot on a fixed support (32) and driven in rotation by its periphery, this pulley being equipped on the side opposite the support with two pins (37), directed parallel to its axis, each pin being engaged in a recess (40) which has jaws (39) constituting the dog, the two jaws delimiting a central opening (42) for holding a stick, and being held pressed against each other by at least one elastic component, such as an O-ring (44), encircling them.

7. Machine according to any of claims 1 to 6, characterized in that the bowl (7) containing the head (8) for spraying sugar, and inside which a candyfloss is formed on a stick (5), consists of a crown wheel (45) driven in rotation to which a side wall (46) is attached in a detachable manner, and is delimited by an upper plate (32) traversed by the dog (38) ensuring that a stick (5) is held during the formation of a candyfloss.

8. Machine according to claim 7, characterized in that it includes, below the bowl, a zone for receiving the candyfloss, accessible through a door or the like, and having two rollers (62, 63) with horizontal parallel axes, one (62) of which is provided with a reel of film (64) made of food grade synthetic material, which is rolled onto the roller (63), which is the receiving roller driven in a sequential manner, the zone (65) included between the rollers (62, 63) forming the zone for receiving the candyfloss before it is removed.

9. Machine according to any of claims 1 to 8, characterized in that it includes a reservoir (54) for storing sugar, the lower end of which includes an opening for putting it into communication, through a valve (55), with an oblique tube (56) itself communicating with a vertical tube (57) which, emerging above the head (8) for spraying sugar so as to supply the latter with sugar, is equipped at its lower end with a shutter (58) in the form of a valve, secured to a rod (59) traversing the tube (57) axially and the other end of which is subjected to the action of a spring (60) acting in the direction in which the valve closes, an electromagnet (61) being provided which, when supplied with power, drives a thruster (62) which compresses the spring (60) and frees the rod (59) and the shutter (58).

10. Machine according to any of claims 1 to 9, characterized in that it includes, in its front face, an opening (9) for access to the zone for receiving the candyfloss, which can be closed by a door consisting of a section of a cylindrical surface (67) with a horizontal axis, of which the two ends are secured to two end plates (68) in the form of circular discs, having the same axis as the surface section (67), and pivoted on the two side walls of the machine about this axis, so that, in a first position, the section of a cylindrical surface (67) situated outside the machine, closes the opening (9) and that, in a second position, the section of a cylindrical surface is tilted inside the machine, uncovers the opening (9) and allows access to the zone for receiving the candyfloss.

## Patentansprüche

1. Maschine für die automatische Herstellung von Zuckerwatte, mit einem Vorrat an Stäbchen, der die Einzelabgabe der Stäbchen gewährleistet, einer Vorrichtung zum Überführen jedes Stäbchens zu einem Mitnehmer, zwischen dessen Backen das Stäbchen blockiert ist, wobei es in Innere einer Wanne ragt, die den Zucker-Sprühkopf enthält, wobei der Mitnehmer wie auch der Sprühkopf im Verlauf der Bildung von Zuckerwatte gedreht wird, dadurch gekennzeichnet, daß der Vorrat an Stäbchen (5) aus einem Zylinder (10) mit horizontaler oder im wesentlichen horizontaler Achse besteht, der um seine Achse drehbar gelagert ist und Drehantriebsmitteln (13) zugeordnet ist, wobei dieser Zylinder auf seiner Innenfläche mit mindestens einer Längsstange (15) ausgestattet ist, die einen in der Form der Stäbchen kalibrierten Hohlraum (16) begrenzt, der in die Seite der Stange mündet, die in der Drehrichtung es Zylinders nach vorne gedreht ist, der unterhalb seiner höchsten Erzeugenden eine Vorrichtung (17, 18) zur Aufnahme und Überführung jedes Stäbchens (5) enthält, das durch die Stange (15) aus dem Vorrat entnommen wird und unter Einwirkung der Schwerkraft von ihr entweicht.

2. Maschine nach Anspruch 1, dadurch gekennzeichnet, daß der Zylinder (10) durch Rollen (12) abgestützt wird, die seine Drehung mittels eines Zahnriemens (14) ermöglichen, der durch einen Motor (13) angetrieben wird und auf dem Rand des Zylinders (10) aufliegt.

3. Maschine nach einem der Ansprüche 1 und 2, dadurch gekennzeichnet, daß die Vorrichtung zur Aufnahme und Überführung jedes aus dem Vorrat entnommenen Stäbchens (5) eine im wesentlichen horizontale Rutsche (17) aufweist, die in dem Zylinder angeordnet ist und von der ein Ende aus ihm herausragt, wobei diese Rutsche (17) ein motorisiertes Endlosband (18) enthält, dessen außerhalb des Zylinders angeordnetes Ende in eine Vorrichtung mündet, die es ermöglicht, jedes Stäbchen von einer horizontalen in eine vertikale Ausrichtung zu bringen.

4. Maschine nach einem der Ansprüche 1 bis 3, dadurch gekennzeichnet, daß sie eine Vorrichtung aufweist, die es ermöglicht, jedes Stäbchen (5) von einer horizontalen Ausrichtung in eine vertikale Ausrichtung zu bringen, und die aus einem Füllrumpf (20) besteht, der begrenzt wird durch zwei in der Zufuhrrichtung der Stäbchen ausgerichtete im wesentlichen vertikale Wände (22), eine dem Zufuhrbereich der Stäbchen gegenüberliegende und bezüglich der Vertikalen leicht geneigte Wand (23) und eine auf der Seite der Stäbchenzufuhr angeordnete Wand (24), welche der Reihe nach von oben nach unten eine im wesentlichen horizontale Ebene, eine mit etwa 45° geneigte Ebene und eine bezüglich der Vertikalen wenig geneigte Ebene aufweist.

5. Maschine nach einem der Ansprüche 1 bis 4, dadurch gekennzeichnet, daß sie Mittel zum Zentrieren jedes Stäbchens in einer vertikalen Position aufweist, die aus mindestens einem Trichter (24, 27) und Mitteln zum Einführen jedes Stäbchens in einen Mitnehmer besteht, der aus zwei Rollen (28, 29) mit im wesentlichen parallelen Achsen besteht, von welchen Rollen mindestens eine eine Rille aufweist und mindestens eine angetrieben wird.

6. Maschine nach Anspruch 5, dadurch gekennzeichnet, daß der Mitnehmer (38) eine Riemenscheibe (34) aufweist, die auf einer feststehenden Auflage (32) drehbar gelagert ist und über ihren Rand gedreht wird, wobei diese Riemenscheibe auf der zur Auflage entgegengesetzten Seite mit zwei Zapfen ausgestattet ist, die parallel zu ihrer Achse ausgerichtet sind, wobei jeder Zapfen in eine Aussparung (40) eingreift, die in einer den Mitnehmer bildenden Backe (39) enthalten ist, wobei die beiden Backen eine mittige Öffnung (42) zum Halten eines Stäbchens begrenzen und durch mindestens ein sie umgebendes elastisches Element, wie z.B. einen O-Ring (44), aneinandergedrückt gehalten werden.

7. Maschine nach einem der Ansprüche 1 bis 6, dadurch gekennzeichnet, daß die Wanne (7), die den Zucker-Sprühkopf (8) enthält und in deren Innern die Bildung einer Zuckerwatte auf einem Stäbchen (5) gewährleistet wird, aus einem drehbaren Kranz (45) besteht, auf dem eine Seitenwand (46) abnehmbar befestigt ist, und durch eine von dem Mitnehmer (38) durchquerte obere Platte (32) begrenzt wird, die den Halt eines Stäbchens (5) während der Bildung einer Zuckerwatte gewährleistet.

8. Maschine nach Anspruch 7, dadurch gekennzeichnet, daß sie unterhalb von der Wanne einen Aufnahmebereich für Zuckerwatte aufweist, der durch eine Tür oder dergleichen zugänglich ist, und zwei Walzen (62, 63) mit horizontalen und parallelen Achsen aufweist, von denen diejenige (62) mit einer Filmrolle (64) aus lebensmittelechtem synthetischen Material ausgestattet ist, die auf der Walze (63) aufgerollt ist, welche die sequentiell angetriebene Aufnahmewalze ist, wobei der zwischen den Walzen (62, 63) enthaltene Bereich (65) den Aufnahmebereich der Zuckerwatte vor ihrer Entnahme bildet.

9. Maschine nach einem der Ansprüche 1 bis 8, dadurch gekennzeichnet, daß sie ein Speichergefäß (54) aufweist, dessen unteres Ende eine Öffnung aufweist, um über einen Schieber (55) eine Verbindung mit einem schrägen Rohr (56) herzustellen, das seinerseits mit einem vertikalen Rohr (57) in Verbindung steht, welches oberhalb des Zucker-Sprühkopfes (8) mündet, um letzteres mit Zucker zu versorgen, und an seinem unteren Ende mit einem Verschluß (58) in Form eines Ventils ausgestattet ist, das mit einer Stange (59) verbunden ist, welche das Rohr (57) axial durchquert und deren anderes Ende der Wirkung einer Feder (60) ausgesetzt ist, die in der Schließrichtung des Ventils wirkt, wobei ein Elektromagnet (61) vorgesehen ist, der bei Beaufschlagung einen Stößel (62) mitnimmt, der eine Feder (60) komprimiert und die Stange (59) sowie den Verschluß (58) freigibt.

10. Maschine nach einem der Ansprüche 1 bis 9, dadurch gekennzeichnet, daß sie in ihrer Vorderseite eine Zugangsöffnung (9) zum Aufnahmebereich der Zuckerwatte hat, die aus einem Teilstück (67) einer Zylinderoberfläche mit horizontaler Achse besteht, wobei die beiden Enden mit zwei weichen flanschartigen Blenden (68) in Form von kreisförmigen Scheiben mit derselben Achse wie das Oberflächenstück (67) verbunden sind und die an den beiden Seitenwänden der Maschine um diese Achse herum so angelenkt sind, daß in einer ersten Stellung das außerhalb der Maschine angeordnete Teilstück (67) der Zylinderoberfläche die Öffnung (9) abdeckt und daß in einer zweiten Stellung das Teilstück der Zylinderoberfläche ins Innere der Maschine geschwenkt wird, die Öffnung (9) freigibt und den Zugriff zum Aufnahmebereich der Zuckerwatte ermöglicht.
